# EUROPÄISCHE PATENTSCHRIFT

(11) **EP 3 175 039 B1**
(45) Veröffentlichungstag und Bekanntmachung des Hinweises auf die Patenterteilung: **19.09.2018**
(21) Anmeldenummer: 15733633.0
(22) Anmeldetag: 03.07.2015
(51) Int. Cl.: E01B 29/46, B23K 11/04, E01B 11/50, B23K 11/00

(54) **SCHWEISSAGGREGAT FÜR SCHIENEN**
WELDING UNIT FOR RAILS
UNITÉ DE SOUDAGE POUR RAILS

(30) Priorität: 28.07.2014 AT 5922014
(43) Veröffentlichungstag der Anmeldung: 07.06.2017
(73) Patentinhaber: Plasser & Theurer Export von Bahnbaumaschinen Gesellschaft m.b.H., 1010 Wien (AT)
(72) Erfinder: STEINER, Roland, A-3203 Rabenstein an der Pielach (AT)
(86) Internationale Anmeldenummer: PCT/EP2015/001365
(87) Internationale Veröffentlichungsnummer: WO 2016/015816

(56) Entgegenhaltungen:
- WO-A1-2010/015309
- WO-A1-2010/063362

## Beschreibung

Die Erfindung betrifft ein Schweißaggregat zum Verbinden zweier Schienen eines Gleises durch Abbrennstumpfschweißen, mit zur Anlage an einen Schienensteg vorgesehene Kontaktflächen aufweisenden Klemmbacken.

Ein derartiges Schweißaggregat ist durch WO 2010/063362 A1 bekannt. Die jeweils zwei voneinander distanzierte Kontaktflächen aufweisenden Klemmbacken dienen einerseits zur Herstellung eines maximalen Kraftschlusses zwischen Schiene und Schweißaggregat und andererseits auch zur Stromübertragung.

Die Aufgabe der vorliegenden Erfindung liegt nun in der Schaffung eines Schweißaggregates der eingangs genannten Art, mit dem eine verbesserte Stromübertragung möglich ist.

Diese Aufgabe wird erfindungsgemäß mit einem Schweißaggregat der gattungsgemäßen Art durch die im Kennzeichen des Hauptanspruches angeführten Merkmale gelöst.

Durch diese Merkmalskombination wird der Vorteil eines für die Stromübertragung optimalen sowie konstanten Anpressdruckes erreicht. Außerdem können auf den Kontaktflächen der Strombacken auftretende Verschleißspuren problemlos weggeschliffen werden, ohne dadurch die vorgenannten Vorteile zu beeinträchtigen.

Weitere Vorteile der Erfindung ergeben sich aus dem Unteranspruch und der Zeichnungsbeschreibung.

Im Folgenden wird die Erfindung anhand eines in der Zeichnung dargestellten Ausführungsbeispieles näher beschrieben. Es zeigen: Fig. 1 eine Ansicht eines Schweißaggregates, Fig. 2 eine Draufsicht auf eine Klemm- und Strombacke, und Fig. 3 einen Querschnitt durch die Strombacke.

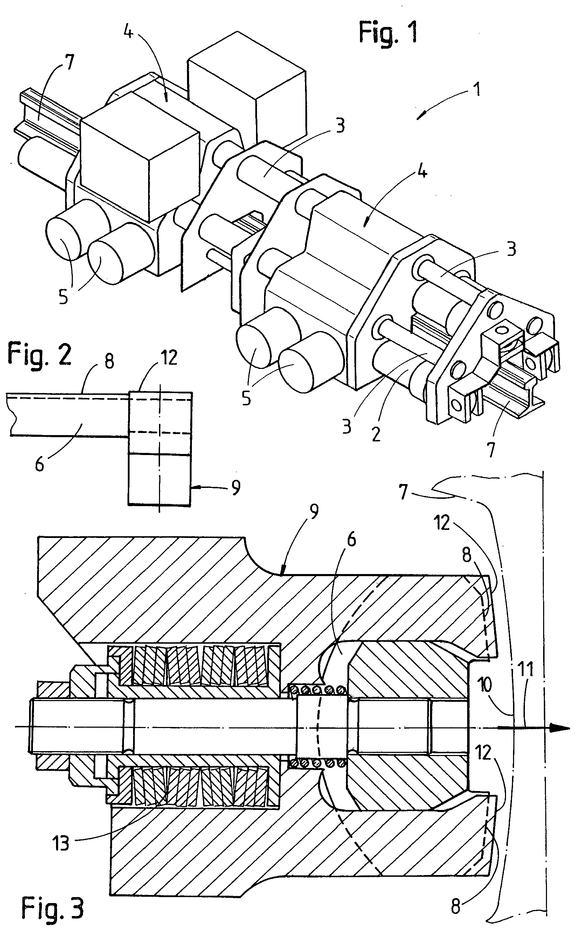

Ein in Fig. 1 dargestelltes Schweißaggregat 1 zum Verbinden zweier Schienen 7 eines Gleises durch Abbrennstumpfschweißen setzt sich aus zwei mit Hilfe von Verschiebezylindern 2 entlang von Aggregatführungen 3 zueinander verschiebbaren Aggregatteilen 4 zusammen. Diese sind jeweils mit zwei Klemmantrieben 5 verbunden, mit denen - hier nicht sichtbare - Klemmbacken 6 (s. Fig. 2, 3) an die miteinander zu verschweißenden Schienen 7 anpressbar sind.

Die in den Fig. 2 und 3 dargestellte Klemmbacke 6 weist zur Anlage an einen Schienensteg 10 vorgesehene Kontaktflächen 8 auf. Ein Ende der Klemmbacke 6 ist mit einer für die Stromübertragung vorgesehenen, aus Kupfer gebildeten Strombacke 9 verbunden. Diese ist - in einer Anpressrichtung 11 an die Schiene 7 - relativ zur Klemmbacke 6 verschiebbar und weist zur Anlage an den Schienensteg 10 vorgesehene Kontaktflächen 12 auf.

Die durch Druck einer Feder 13, vorzugsweise einer Tellerfeder, vorgespannte Strombacke 9 befindet sich in der Anpressrichtung 11 in einer vorderen Endstellung, in der die Kontaktfläche 12 der Strombacke 9 - bei einer vom Schienensteg 10 distanzierten Außerbetriebstellung (s. Fig. 3) - über die Kontaktfläche 8 der Klemmbacke 6 vorragt. Damit ist ein konstanter Anpressdruck der Strombacke 9 an den Schienensteg 10 gewährleistet, sobald die Klemmbacke 6 an die Schiene 7 angepresst wird. Außerdem besteht in vorteilhafter Weise die Möglichkeit, die Kontaktflächen 12 der Strombacke 9 mehrmals nachzuschleifen, um damit leichte Beschädigungen der Oberfläche zur Aufrechterhaltung eines möglichst geringen Übergangwiderstandes zu eliminieren.

Wie in Fig. 3 ersichtlich, ist die Strombacke 9 direkt an der Klemmbacke 6 befestigt und durch den Druck der Feder 13 in Anpressrichtung 11 vorgespannt. Sobald die Klemmbacke 6 zur Einleitung eines Schweißvorganges an den Schienensteg 10 angepresst wird, erfolgt automatisch eine Rückwärtsbewegung der Strombacke 9 entgegen der Anpressrichtung 11, bis die beiden Kontaktflächen 8 und 12 in einer gemeinsamen Ebene liegen.

## Patentansprüche

1. Schweißaggregat (1) zum Verbinden zweier Schienen (7) eines Gleises durch Abbrennstumpfschweißen, mit zur Anlage an einen Schienensteg (10) vorgesehene Kontaktflächen (8) aufweisenden Klemmbacken (6), **gekennzeichnet durch folgende Merkmale:**
a) für eine Stromübertragung ist eine Strombacke (9) mit einer zur Anlage an den Schienensteg (10) aufweisenden Kontaktfläche (12) vorgesehen,
b) die Strombacke (9) ist relativ zur Klemmbacke (6) - in einer zur Anlage an die Schiene (7) führenden Anpressrichtung (11) - verschiebbar,
c) in einer vom Schienensteg (10) distanzierten Außerbetriebstellung befindet sich die Strombacke (9) durch den Druck einer Anpressfeder (13) in einer - bezüglich der Anpressrichtung (11) - vorderen Endstellung, in der die Kontaktfläche (12) der Strombacke (9) über die Kontaktfläche (8) der Klemmbacke (6) vorragt.

2. Schweißaggregat nach Anspruch 1, **dadurch gekennzeichnet, dass** die Strombacke (9) direkt an der Klemmbacke (6) befestigt und relativ zu dieser in der Anpressrichtung (11) verschiebbar ist.

## Claims

1. A welding unit (1) for connecting two rails (7) of a track by flash-butt welding, the welding unit having clamping jaws (6) comprising contact surfaces (8) intended for application to a rail web (10), **characterized by the following features:**
a) a power jaw (9) having a contact surface (12) for application to the rail web (10) is provided for current transmission,
b) the power jaw (9) is displaceable relative to the clamping jaw (6) in a pressing direction (11) leading to contact with the rail (7),
c) in an inoperative position spaced from the rail web (10), the power jaw (9) - due to the pressure of a pressure spring (13) - is situated in a forward end position, with regard to the pressing direction (11), in which the contact surface (12) of the power jaw (9) projects beyond the contact surface (8) of the clamping jaw (6).

2. A welding unit according to claim 1, **characterized in that** the power jaw (9) is fastened directly to the clamping jaw (6) and displaceable relative to the same in the pressing direction (11).

## Revendications

1. Module de soudure (1) pour la connexion de deux rails (7) d'une voie ferrée par soudage par étincelage, avec des mâchoires de serrage (6) présentant des faces de contact (8) prévues pour l'appui sur une âme de rail (10), **caractérisé par les caractéristiques suivantes** :
a) une mâchoire de courant (9) avec une face de contact (12) présentant pour l'appui sur l'âme de rail (10) est prévue pour une transmission de courant,
b) la mâchoire de courant (9) peut être coulissée par rapport à la mâchoire de serrage (6) dans une direction de pression (11) conduisant à l'appui sur le rail (7),
c) la mâchoire de courant (9) se trouve dans une position hors service écartée de l'âme de rail (10) par la pression d'un ressort de pression (13) dans une position finale avant par rapport à la direction de pression (11) dans laquelle la face de contact (12) de la mâchoire de courant (9) fait saillie au-delà de la face de contact (8) de la mâchoire de serrage (6).

2. Module de soudure selon la revendication 1, **caractérisé en ce que** la mâchoire de courant (9) est directement fixée à la mâchoire de serrage (6) et peut être coulissée par rapport à celle-ci dans la direction de pression (11).
